# EUROPEAN PATENT APPLICATION

(11) **EP 1 249 632 A2**
(43) Date of publication of application: **16.10.2002**
(21) Application number: 02252441.7
(22) Date of filing: 04.04.2002
(51) Int. Cl.: F16D 69/02, F16D 69/00

(54) **Cooling mechanism for a brake assembly**

(30) Priority: 10.04.2001 US 829596
(71) Applicant: Meritor Heavy Vehicle Technology, LLC, Troy, Michigan 48084 (US)
(72) Inventor: Naerheim, Yngve, Thousand Oaks, California 91360 (US)
(74) Representative: Jones, John Bryn

(57) **Abstract**

A cooling mechanism for a brake assembly (10) is provided. The brake assembly includes a brake rotor (12) with opposing outer surfaces (14). Brake pads (16) having a lining (18) are arranged adjacent to the opposing outer surfaces as is well known. An actuator (20), typically a hydraulic piston, forces the linings into engagement with the outer surface to slow the vehicle thereby generating a significant amount of heat at the rotor/brake pad interface. Inadequate cooling of the brakes occurs because of the tight packaging of the brake components and limited airflow. To better dissipate the heat the brake pad lining includes a cermet matrix, which has a high thermal conductivity. By utilizing a cermet in the brake pad lining, as opposed to conventional compositions, substantially more heat may be extracted at the rotor/brake pad interface thereby improving brake performance.

## Description

### BACKGROUND OF THE INVENTION

This invention relates to a cooling mechanism for a brake assembly, and more specifically, the invention relates to brake pads for cooling brake assemblies.

Modern vehicles are required to stop in shorter distances than previously necessary to improve vehicle performance and handling. Braking components, such as brake rotors and drums, calipers, and brake pads, have experienced higher operating temperatures as the demand for shorter stopping distances has increased. As the temperature of the brake component exceeds its thermal capacity, the performance of the component may be compromised and the stopping distance increased. For example, the rate of brake pad wear may increase or the brakes may "fade" and become virtually inoperative due to the higher temperatures.

The problem of higher temperatures is exacerbated by the tighter packaging of modern vehicles. The size of brake components has been reduced to decrease weight and cost, which has reduced the thermal capacity of the affected brake component. Brake components, such as rotors, have utilized ribs or vents to increase the surface area to increase heat dissipation and cooling of the rotor. However, tighter packaging has adversely affected airflow through the brake components, which has reduced the cooling effects of convection around the brake components. This is particularly true at the rotor/brake pad interface. Furthermore, current brake pads, which have relatively low thermal conductivities, act as insulators and retain heat at the rotor/brake pad interface. Therefore, what is needed is cooling mechanism for effectively cooling the brake assembly, particularly at the rotor/brake pad interface.

### SUMMARY OF THE INVENTION AND ADVANTAGES

The present invention provides a cooling mechanism for a brake assembly. The brake assembly includes a brake rotor with opposing outer surfaces. Brake pads having a lining are arranged adjacent to the opposing outer surfaces as is well known. An actuator, typically a hydraulic piston, forces the linings into engagement with the outer surface to slow the vehicle thereby generating a significant amount of heat at the rotor/brake pad interface. Inadequate cooling of the brakes occurs because of the tight packaging of the brake components and limited airflow. To better dissipate the heat the brake pad lining includes a cermet matrix, which has a high thermal conductivity. By utilizing a cermet in the brake pad lining, as opposed to conventional compositions, substantially more heat may be extracted at the rotor/brake pad interface thereby improving brake performance.

Accordingly, the above invention provides a cooling mechanism for effectively cooling the brake assembly, particularly at the rotor/brake pad interface.

### BRIEF DESCRIPTION OF THE DRAWINGS

Other advantages of the present invention can be understood by reference to the following detailed description when considered in connection with the accompanying drawings wherein:
Figure 1 a schematic view of a brake assembly;
Figure 2 is a graph of temperature vs. distance for the present invention compared to the prior art; and
Figure 3 is a perspective view of one embodiment of the present invention.

### DETAILED DESCRIPTION OF THE PREFERRED EMBODIMENT

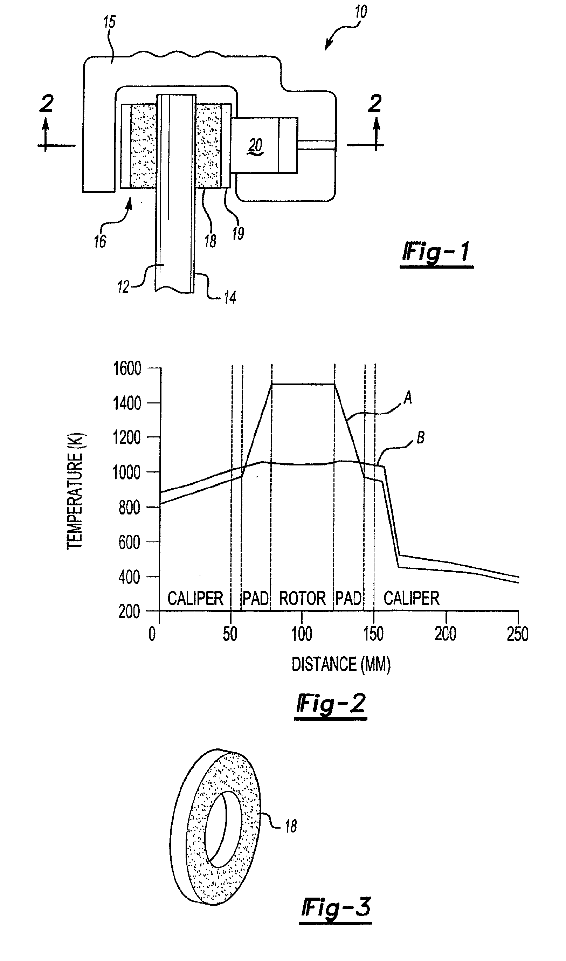

Referring to Figure 1, the brake assembly 10 includes a brake rotor 12 with opposing outer surfaces 14. Brake pads 16 are supported by the caliper 15 and include a friction lining 18 and a backing 19. The friction lining 18 is arranged adjacent to the opposing outer surfaces 14. An actuator 20, typically a hydraulic piston, forces the linings 18 into engagement with the outer surfaces 14 to slow the vehicle thereby generating a significant amount of heat.

The lining includes a matrix or binder, a filler, a friction modifier, and a strengthener. Typically, phenolic based brake pad linings have been used, that is, the matrix is a phenolic based material. The use of phenolic based linings has posed several problems during high temperature conditions. First, phenolics have relatively low thermal conductivities which cause the pad to act as an insulator thereby elevating temperatures at the rotor/brake pad interface. Secondly, phenolics may begin to deteriorate at these elevated temperatures. To this end, it is desirable to utilize a material that is suitable for brake linings and which has a high thermal conductivity. To dissipate the heat the lining includes a cermet matrix, which has a high thermal conductivity. By utilizing a cermet in the brake pad lining, as opposed to conventional compositions, substantially more heat may be extracted at the rotor/brake pad interface.

Cermets, which are ceramic metal compositions, are desirable due to the strength and heat resistance of the ceramic component and the high thermal conductivity of the metal component. Any suitable ceramic and metal may be used to form a cermet suitable for use as a brake lining. Fillers, strengtheners, and friction modifier may be added as needed to obtain additional desired lining properties.

Referring to Figure 2, a graph depicts the present invention brake lining (curve A) having a cermet matrix compared to a prior art phenolic based lining(curve B). The graph shows the temperature across a section of the brake assembly, shown by line 2-2 in Figure 1. A cast gray-iron, non-vented rotor was used with both types of pads. As may be seen, the cermet linings drastically reduce the temperature at the rotor/brake pad interface compared to phenolic linings by extracting heat from the rotor.

As mentioned above, the vents rotor typically employ having very little cooling effect because of the inadequate airflow over the rotor. Furthermore, vented rotors add size and weight to the brake assembly. Accordingly, it is desirable to utilize a non-vented rotor, which is made possible by utilizing the cermet lining of the present invention. To further improve cooling, an annular lining 18 may be used, as shown in Figure 3. The larger annular pad provides increased heat absorbing capacity to further reduce brake temperatures.

The invention has been described in an illustrative manner, and it is to be understood that the terminology that has been used is intended to be in the nature of words of description rather than of limitation. Obviously, many modifications and variations of the present invention are possible in light of the above teachings. It is, therefore, to be understood that within the scope of the appended claims the invention may be practiced otherwise than as specifically described.

## Claims

1. A cooling mechanism for a brake assembly (10) comprising:
a brake rotor (12) producing heat and having an outer surface (14);
a brake pad (16) having a lining (18) adjacent to said outer surface for engaging said outer surface, said brake pad having a backing plate (19) supporting said lining; and
said lining including a cermet matrix for extracting heat from said rotor.

2. The mechanism according to claim 1, wherein said lining is annular.

3. The mechanism according to claim 1 or 2, wherein said cermet matrix comprises a ceramic and a metal, said ceramic selected from a group consisting of:
metal oxides, silicon, and combinations thereof;
and said metal selected from a group consisting of:
copper, iron, aluminum, and combinations and alloys thereof.

4. The mechanism according to claim 3, wherein said metal oxides are selected from a group consisting of:
aluminum oxide, zirconium oxide, hafnium oxide, and combinations thereof.

5. The mechanism according to any preceding claim, wherein said rotor is non-vented.

6. The mechanism according to any preceding claim, wherein said cermet matrix consists essentially of aluminum oxide copper.

7. A brake pad (16) for providing improved cooling to a driven brake member (12), said brake pad comprising:
a lining (18) including a cermet matrix for extracting heat from the driven brake member.

8. The brake pad according to claim 7, wherein said cermet matrix comprises a ceramic and a metal, said ceramic selected from a group consisting of:
metal oxides, silicon, and combinations thereof;
and said metal selected from a group consisting of:
copper, iron, aluminum, and combinations and alloys thereof.

9. The brake pad according to claim 8, wherein said metal oxides are selected from a group consisting of:
aluminum oxide, zirconium oxide, hafnium oxide, and combinations thereof.

10. The brake pad according to any one of claims 7 to 9, wherein said cermet matrix consists essentially of aluminum oxide copper.
